# EUROPEAN PATENT APPLICATION

(11) **EP 2 599 713 A1**
(43) Date of publication of application: **05.06.2013**
(21) Application number: 11306585.8
(22) Date of filing: 30.11.2011
(51) Int. Cl.: B64C 11/20, B64C 11/22

(54) **Propeller blade having a honeycomb spar core**

(71) Applicant: Ratier-Figeac SAS, 46101 Figeac Cedex (FR)
(72) Inventor: Prunet, Ludovic, 46120 Themines (FR)
(74) Representative: Leckey, David Herbert

(57) **Abstract**

A propeller blade (200) includes a honeycomb core (204) and a structural layer (206) that surrounds at least a portion of the honeycomb core (204).

## Description

### BACKGROUND OF THE INVENTION

The present invention relates to propellers and, in particular, to propeller blades formed having a honeycomb spar core.

Modem propeller blades typically include root portions which extend into the hub arm of the hub of the propeller system and which are secured to and rotatable relative to the hub arm via a retention assembly. Typically the retention assembly includes one or a plurality of ball bearing assemblies which permit the rotation of the blade in the hub arm for accomplishing pitch change of the blade for altering the speed of the propeller and accordingly, the aircraft.

The blades are typically formed by surrounding a foam spar core with a resin impregnated fabric. Leading and trailing edges of the blade are then formed over the fabric and surrounded by, for example, a Kevlar sock. Such blades are light and effective for their intended purposes.

### BRIEF DESCRIPTION OF THE INVENTION

According to one embodiment, a propeller blade that includes a honeycomb core and a structural layer that surrounds at least a portion of the honeycomb core is disclosed.

According to another embodiment, a method of forming a propeller blade that includes forming a honeycomb core and disposing a structural layer over at least a portion of the honeycomb core is disclosed.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan-view of a prior art propeller blade;
FIG. 2 is a cross-section of the propeller blade shown in FIG. 1; and
FIG. 3 is cross-section of a propeller blade according to one embodiment of the present invention.

### DETAILED DESCRIPTION OF THE INVENTION

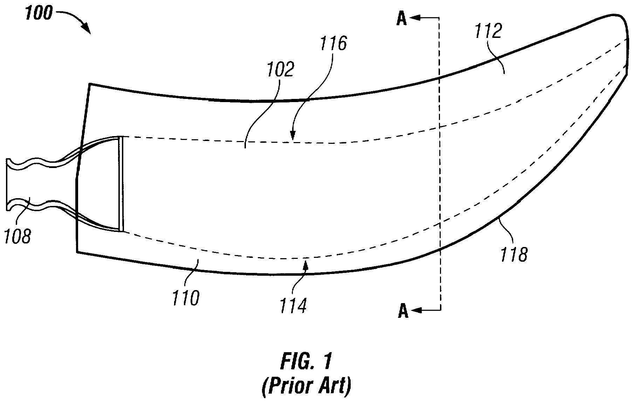

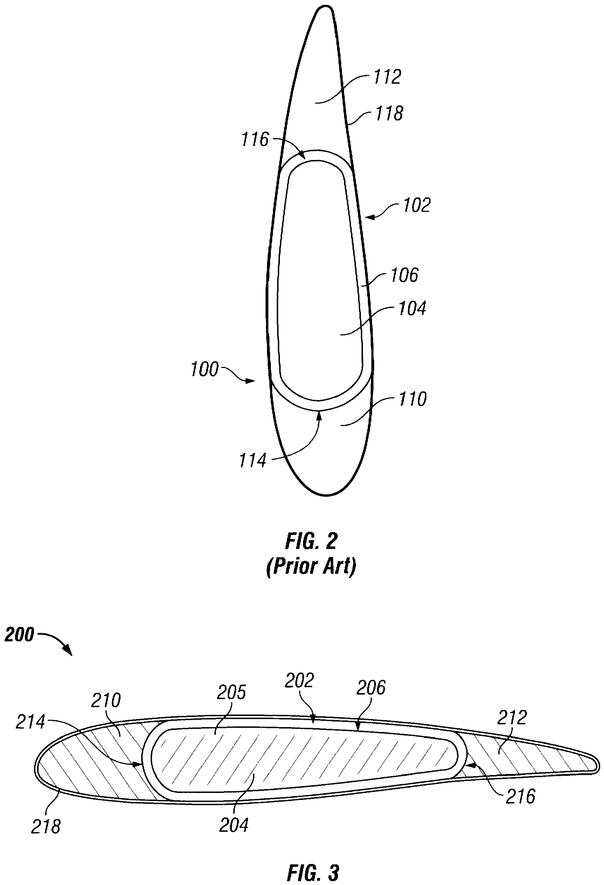

Referring now to FIG. 1, a plan view of a conventional propeller blade 100 is illustrated and will be used to define certain terms, explain how a propeller blade is generally made, and to illustrate the differences between embodiments of the present invention and the prior art. Reference will also be made to FIG. 2, which is a cross-section of the propeller blade 100 of FIG. 1 taken along line A-A, for these purposes.

The blade 100 is formed by first forming a spar 102. The spar 102 includes a spar foam core 104 surrounded by a structural layer 106. The core 104 is typically formed of a foam material that is injected into a mold. The mold can include a layer of fiberglass on the walls thereof to which the foam of the core 104 adheres. As such, the core 104 can be surrounded by a layer of fiberglass (not shown) but this can be omitted.

The structural layer 106 is typically formed of a fabric material (e.g. resin impregnated braided carbon fiber material) and disposed such that it surrounds the core 104 (and the fiberglass layer if it is included). In some cases, the spar 102 is heated to set the resin in the structural layer 106. It has been discovered that, in some instances, considerable thermal stresses can occur in the core 104 as the spar 102 is cooled due to the differences in the coefficients of thermal expansion (CTE) of the core 104 and the structural layer 106.

In some instances, the spar 102 is formed such that a portion of it is surrounded by a root portion 108 that allows the blade 100 to be connected to a hub (not shown). Rotation of the hub causes the blade 100 to rotate and, consequently, causes the generation of thrust to propel an aircraft. In the following discussion, it shall be assumed that the blade 100 rotates in the clockwise direction. The root portion 108 is sometimes referred to as a "tulip" in the industry and is typically formed of a metal. After the spar 102 is formed, leading edge foam 110 and trailing edge foam 112 are formed on the leading and trailing edges 114, 116, respectively of the spar 102. The leading edge foam 110, trailing edge foam 112 and the spar 102 can then be encased in an outer layer 118. The outer layer 118 can be formed of Kevlar and be in the form of a sock that is pulled over the assembly that includes the leading edge foam 110, trailing edge foam 112 and the spar 102. Of course, the outer layer 118 could be formed in other manners as well.

As described above, considerable thermal stresses can occur in the core 104 as the spar 102 is cooled due to the differences in the coefficients of thermal expansion (CTE) of the core 104 and the structural layer 106. These stresses can lead to the cracking of the core 104 and debonding of it from the structural layer 106. In addition, thermal stresses can be created between the core 104 and the structural layer 106 due to the wide range of temperatures experienced by the propeller blade 100 in normal operation.

FIG. 3 illustrates a cut-away side view of a propeller blade 200 according to one embodiment of the present invention. The blade 200 is formed by first forming a spar 202. The spar 202 includes a spar core 204. Unlike the prior art, the spar core is not formed of a foam material. Rather, according to one embodiment, the spar core 204 is formed of a material arranged in a honeycomb configuration 205. The honeycomb configuration 205 arranges the material in a plurality of substantially geometrically shaped interconnected cells. The honeycomb configuration 205 may extend structural support members in polygon shapes, for example hexagonal shapes, forming an array of cells in the spar core 204. Of course, the exact shape and orientation of each cell can vary and not every cell has to have cells of the same geometric shape.

The spar core 204 can be formed either in a mold or can be shaped from a larger piece of honeycomb material. The spar core 204 can be formed of carbon, fiberglass or any other suitable composite or non-composite material.

A structural layer 206 can then be formed around the spar core 204. In one embodiment, the structural layer 206 is formed of a resin-impregnated fiber material, such as a resin-impregnated braided carbon sheet, and disposed such that it surrounds spar core 204 (and the fiberglass layer if present). In some cases, the spar 202 is heated to set the resin in the structural layer 206. In contrast to the prior art, due to cells of the spar core, the resin can penetrate the spar core 204 and more tightly bond it to the structural layer 206. In addition, the material of the spar core 204 can be selected such that it more closely matches the CTE of the structural layer 206 to reduce stresses that can be experienced during cooling as describe above. Such a reduction in thermal stresses can prevent or reduce cracking of the core 204 and, thereby, reduce the possibility of the core 204 and the structural layer 206 becoming debonded from one another.

While not illustrated in FIG. 3, the spar 202 can be formed such that a portion of it is surrounded by a root portion that allows the blade 200 to be connected to a hub (not shown). The root portion may be disposed within the structural layer 206. The structural layer 206 may be disposed over at least a portion of the root portion. Rotation of the hub causes the blade 200 to rotate and, consequently, causes the generation of thrust to propel an aircraft.

After the spar 202 is formed, leading edge foam 210 and trailing edge foam 212 are formed on the leading and trailing edges 214, 216, respectively of the spar 202. The leading edge foam 210, trailing edge foam 212 and the spar 202 can then be encased in an outer layer 218. The outer layer 218 can be formed of Kevlar and in the form of a sock that is pulled over the assembly that includes the leading edge foam 212, trailing edge foam 214 and the spar 202. Of course, the outer layer 218 could be formed in other manners as well.

Replacing the spar foam core 104 with the spar core 204 having the honeycomb configuration 205 (i.e., a honeycomb core), can prevent debonding which may otherwise occur between the spar foam core 104 and structural layer 106. This may be achieved because the honeycomb material can be selected to be more thermally compatible with the structural layer 206, and has a higher strength than foam.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade (200) comprising:
a honeycomb core (204); and
a structural layer (206) that surrounds at least a portion of the honeycomb core (204).

2. The propeller blade of claim 1, further comprising:
a layer of fiberglass at least partially disposed between the honeycomb core (204) and the structural layer (206).

3. The propeller blade of claim 1 or 2, further comprising:
a root disposed within the structural layer (206) at an end of the propeller blade (200).

4. The propeller blade of claim 3, wherein the root surrounds a portion of the honeycomb core (204).

5. The propeller blade of any preceding claim, wherein the honeycomb core (204) is formed of fiberglass, carbon, a composite material or any combination thereof.

6. The propeller blade of any preceding claim 1, wherein the structural layer (206) is formed of a resin-impregnated fiber material.

7. The propeller blade of any of claims 1 to 5, wherein the structural layer (206) is formed of a resin-impregnated braided carbon fiber sheet.

8. A method of forming a propeller blade (200) comprising:
forming a honeycomb core (204); and
disposing a structural layer (206) over at least a portion of the honeycomb core (204).

9. The method of claim 8, further comprising:
coupling a root to the honeycomb core (204);
wherein disposing includes disposing the structural layer (206) over at least a portion of the root.

10. The method of claim 8 or 9, wherein the honeycomb core (204) is formed of fiberglass, carbon, a composite material or any combination thereof.

11. The method of claim 8, 9 or 10, wherein the structural layer (206) is formed of a resin-impregnated fiber material.

12. The method of claim 8, 9 or 10, wherein the structural layer (206) is formed of a resin-impregnated braided carbon fiber sheet.
